# FASCICULE DE BREVET EUROPEEN

(11) **EP 1 425 199 B1**
(45) Date de publication et mention de la délivrance du brevet: **29.03.2006**
(21) Numéro de dépôt: 02779627.5
(22) Date de dépôt: 09.08.2002
(51) Int. Cl.: B60N 2/30, B60N 2/36

(54) **SIEGE POUR VEHICULE AUTOMOBILE**
KRAFTFAHRZEUGSITZ
MOTOR VEHICLE SEAT

(30) Priorité: 13.09.2001 FR 0111865
(43) Date de publication de la demande: 09.06.2004
(73) Titulaire: Renault s.a.s., 92100 Boulogne Billancourt (FR)
(72) Inventeur: VASSEUR, Patrice, F-75007 Paris (FR); BENAICHA, Naoufel, F-93300 Aubervilliers (FR); JANODET, Vincent, F-91130 Leuville sur Orge (FR)
(86) Numéro de dépôt international: PCT/FR2002/002840
(87) Numéro de publication internationale: WO 2003/022623

(56) Documents cités:
- EP-A- 0 990 551
- GB-A- 2 347 343
- US-A- 2 926 948
- US-A- 5 195 795

## Description

La présente invention concerne un siège, notamment pour véhicule automobile, du type comportant un dossier et une assise montés à rotation l'un sur l'autre autour d'au moins un pivot dossier-assise sensiblement transversal, comportant au moins deux pieds, les extrémités du premier pied étant montées à rotation sur ladite assise et sur une base, fixée sur un plancher, autour de premiers pivots d'assise et de base respectivement, sensiblement transversaux, ledit siège étant mobile entre une position rangée dans laquelle ledit dossier et ledit premier pied sont sensiblement couchés sur ladite assise et une position déployée dans laquelle ledit dossier et ledit premier pied sont sensiblement redressés par rapport à ladite assise.

On connaît de EP-A-0 990 551 un siège de ce type. Le déploiement de ce siège nécessite plusieurs manipulations successives, notamment le redressement du dossier indépendamment de celui des pieds pour faciliter le déploiement.

On connaît également du brevet américain US-A- 5 195 795 un siège escamotable de ce type, ledit siège comportant en outre des moyens de couplage des mouvements dudit premier pied et dudit dossier par rapport à ladite assise.

Ce siège présente cependant plusieurs inconvénients. Notamment, il se déploie vers l'arrière du décrochement du plancher dans lequel il est rangé. Après déploiement, l'espace vide de ce décrochement ne peut donc être utilisé comme volume de coffre.

En outre, une trappe s'ouvrant vers l'avant est prévue pour obturer ce décrochement dans chacune des positions déployée et rangée du siège. La transformation du siège d'une position à l'autre oblige donc l'utilisateur à manipuler cette trappe deux fois.

Pour disposer de l'espace vide sous cette trappe dans la position déployée du siège, il est également prévu une porte dans cette trappe, porte qui alourdit le coût de réalisation de cette trappe.

Le but de la présente invention est de fournir un siège de ce type ne présentant pas les inconvénients sus-mentionnés.

On atteint ce but au moyen d'un siège, notamment pour véhicule automobile, du type décrit en préambule de la présente description, caractérisé en ce que, dans la position rangée, le premier pied est incliné, par rapport audit premier pivot de base, vers l'arrière du siège, de manière que l'espace occupé par le siège dans sa position rangée soit situé, au moins en partie, derrière celui occupé par le siège déployé.

Selon d'autres caractéristiques préférentielles de l'invention,
- ledit siège comporte au moins un deuxième pied dont les première et deuxième extrémités sont montées à rotation sur ladite assise et sur ladite base autour de deuxièmes pivots d'assise et de base respectivement, sensiblement transversaux, lesdits premier et deuxième pieds étant conformés de manière à se bloquer réciproquement en rotation dans le sens du déploiement, dans ladite position déployée,
- lesdits premier et deuxième pieds comportent des première et deuxième arêtes d'appui, respectivement, en contact dans ladite position déployée,
- les moyens de couplage comportent une bielle de conjugaison montée à rotation, par des première et deuxième extrémités, sur ledit dossier et sur ledit deuxième pied, respectivement, autour de premier et deuxième pivots de bielle de conjugaison, respectivement, sensiblement transversaux,
- au moins un desdits pieds comporte une troisième arête d'appui prenant appui sur ledit plancher dans ladite position déployée,
- ledit siège comporte un troisième pied monté à rotation sur ladite assise autour d'un troisième pivot d'assise sensiblement transversal, ledit troisième pied étant guidé en rotation autour dudit troisième pivot d'assise au moyen d'une bielle de guidage montée à rotation autour de premier et deuxième pivots de bielle de guidage, sensiblement transversaux, respectivement sur ledit troisième pied et sur un autre pied dudit siège,
- ledit siège comporte des moyens de butée dudit troisième pied dans ladite position déployée conformés pour empêcher un glissement d'une extrémité d'appui dudit troisième pied sur ledit plancher,
- lesdits deuxièmes pivots de bielle de guidage et de bielle de conjugaison sont un même organe,
- ladite assise comporte une protubérance d'écartement dudit pivot dossier-assise du plan de ladite assise,
- ledit plancher comporte un décrochement au fond duquel est fixée ladite base et dans lequel ledit siège est complètement escamoté dans ladite position rangée,
- ledit dossier comporte une plaque de dossier conformée pour obturer ledit décrochement dans ladite position rangée,
- ledit décrochement comporte une bosse d'appui d'un appui-tête dans ladite position rangée.

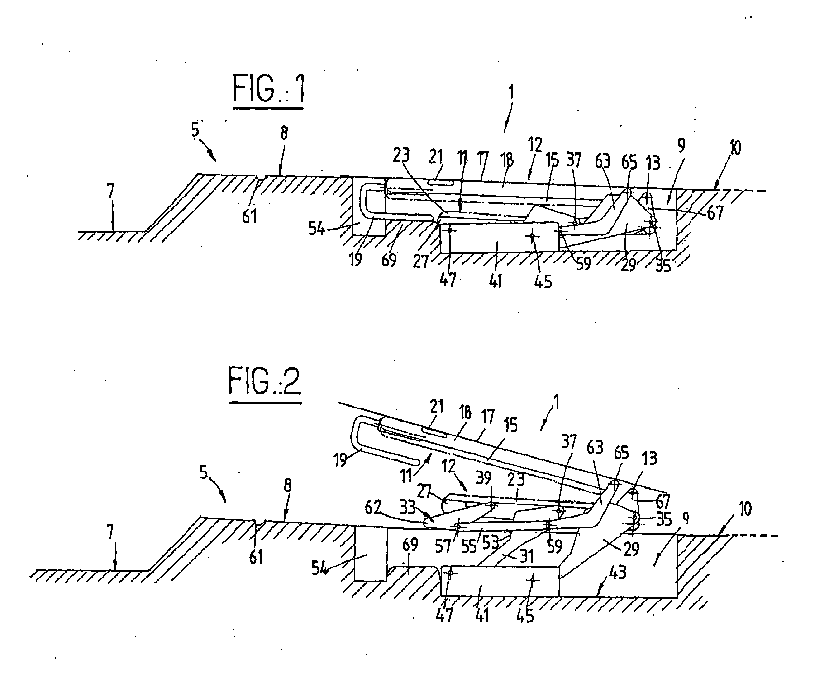

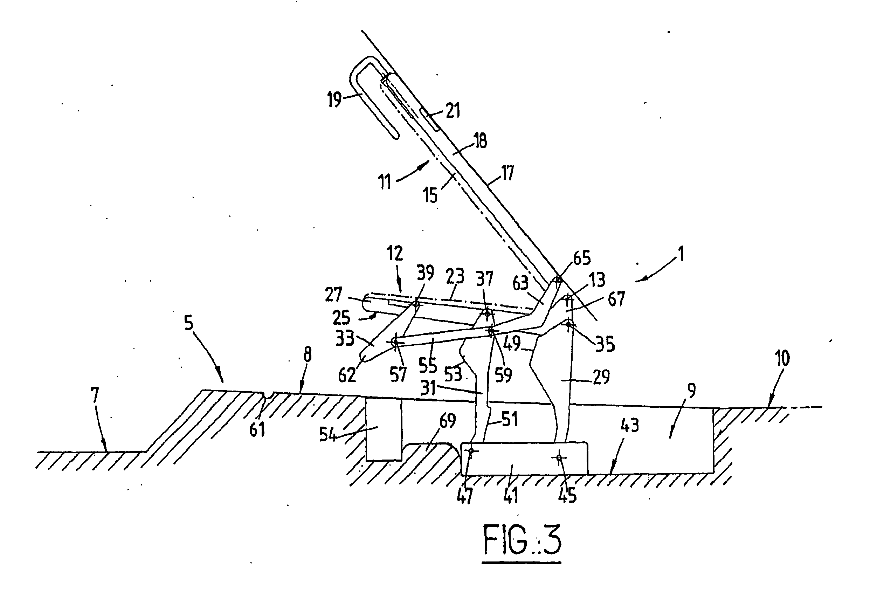

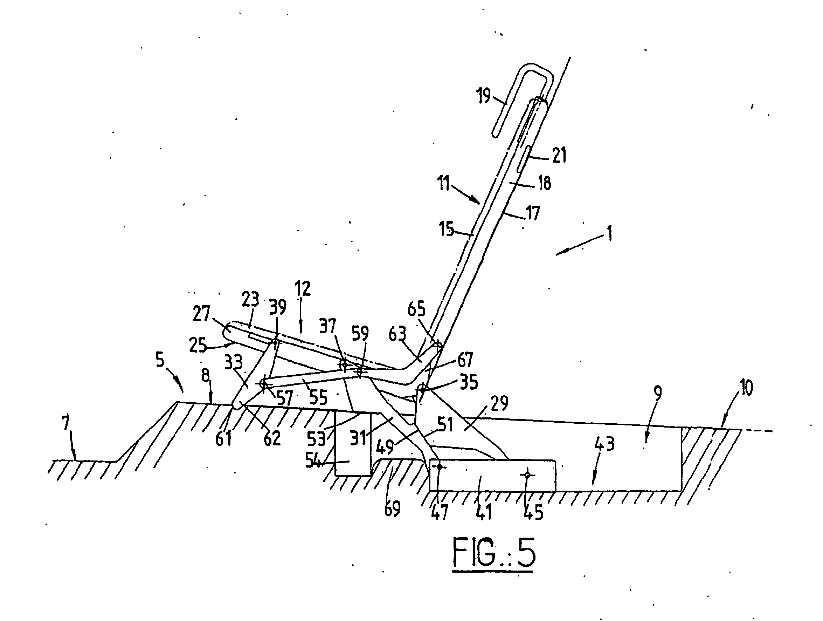

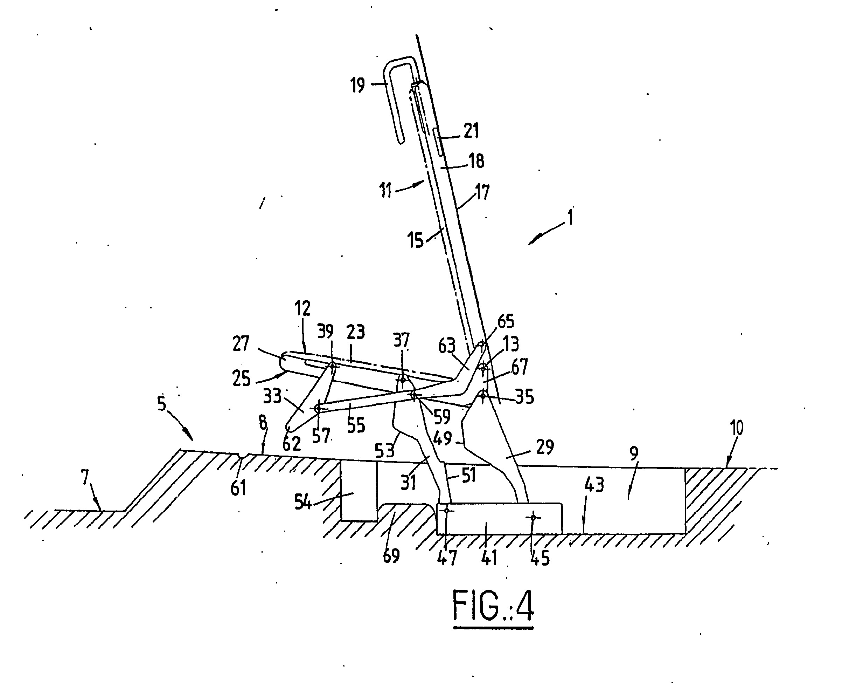

D'autres caractéristiques et avantages de la présente invention apparaîtront à la lecture de la description qui va suivre et à l'examen du dessin annexé, dans lequel les figures 1 à 5 représentent, vu de côté, le siège selon l'invention dans le mode de réalisation préféré, dans des étapes successives de sa transformation entre une position rangée, ou escamotée, (figure 1) et une position déployée, ou "de service " (figure 5).

Dans la description qui va suivre, le siège selon l'invention est supposé monté dans le coffre d'un véhicule, orienté de manière qu'en position déployée, le passager qui y est assis soit orienté face à la route. Les directions transversale et longitudinale utilisées dans la description sont donc identiques à celles de ce véhicule. Les adjectifs tels que avant ", " arrière ", " supérieur "," inférieur ", " droite ", gauche " etc. sont ceux qu'utiliserait ce passager.

Le siège 1 représenté sur les figures 1 à 5 est escamotable dans un plancher 5 d'un coffre d'un véhicule automobile.

Le plancher 5, sensiblement horizontal, comporte successivement de l'avant vers l'arrière un décrochement avant 7, destiné à recevoir les pieds d'un passager assis sur le siège 1, une plate-forme centrale 8, un décrochement arrière 9 et une plate-forme arrière 10.

Le siège 1 comporte un dossier 11 et une assise 12, le dossier 11 étant monté pivotant sur l'assise 12 autour d'un pivot dossier-assise 13 sensiblement transversal.

Le dossier 11 comporte un coussin de dossier 15 peu épais, monté solidaire sur une plaque de dossier 17 plane et rigide, comportant, le long de chaque bord latéral du dossier 11, des ailes latérales de dossier 18, destinées à maintenir latéralement le coussin de dossier 15.

Le dossier 11 comporte en outre en partie supérieure un appui-tête 19 et une poignée de commande 21.

L'assise 12 comporte un coussin d'assise 23 peu épais, monté solidaire sur une plaque de d'assise 25 sensiblement plane et rigide.

Pour plus de clarté, les coussins de dossier 15 et d'assise 23 sont représentés en trait mixte.

Le siège 1 est sensiblement symétrique par rapport à un plan vertical longitudinal passant par son milieu. Pour une meilleure clarté, seuls les organes situés à gauche du siège 1, visibles sur les figures 1 à 5, sont décrits dans la suite de la description.

La plaque d'assise 25 comporte latéralement une aile gauche d'assise 27, sensiblement verticale, sur laquelle sont montés à rotation des premier, deuxième et troisième pieds, appelés encore pieds arrière 29, central 31 et avant 33, autour de premier, deuxième et troisième pivots d'assise, appelés encore pivots arrière 35, central 37 et avant 39, respectivement, sensiblement transversaux.

Les pieds arrière 29 et central 31 sont également montés à rotation sur une base 41 solidaire du fond 43 du décrochement arrière 9, autour de premier et deuxième pivots de base, encore appelés pivots de base arrière 45 et central 47, respectivement. La distance entre ces deux derniers pivots est sensiblement identique à la distance entre les pivots arrière 35 et central 37, de manière que les pieds arrière 29 et central 31 se déplacent sensiblement parallèlement l'un à l'autre entre les positions rangée et déployée.

Selon une caractéristique de l'invention, les pieds arrière 29 et central 31 sont conformés de manière à prendre appui l'un sur l'autre dans la position déployée du siège 1. Pour que l'appui soit efficace, ces pieds comportent respectivement des première et deuxième arêtes d'appui 49 et 51, respectivement, sensiblement rectilignes, destinées à être en contact sur toute leur longueur, dans cette position.

Le pied central 31 comporte encore une troisième arête d'appui 53 rectiligne destinée à prendre appui sur la plate-forme centrale 8 dans la position déployée du siège 1. Entre les zones d'appui des troisièmes arêtes d'appui 53, la plate-forme centrale 8 présente une échancrure centrale 54 destinée à recevoir l'appui-tête 19 dans la position rangée du siège 1.

Selon une autre caractéristique de l'invention, le pied avant 33 est guidé en rotation autour du pivot avant 39 par l'intermédiaire d'une bielle de guidage 55 montée à rotation autour de premier et deuxième pivots de bielle de guidage 57 et 59, sensiblement transversaux, sur le pied avant 33 et sur le pied central 31, respectivement. La forme de la bielle de guidage 55 et la position des pivots de bielle de guidage 57 et 59 sont déterminées de manière que dans la position rangée, le pied avant 33 soit sensiblement aligné avec la plaque d'assise 25, et que, dans la position déployée, il soit sensiblement redressé par rapport à cette dernière.

Le pied avant 33 est conformé de manière à prendre appui sur la plate-forme centrale 8 dans la position déployée. Un logement 61 est ménagé dans la plate-forme centrale 8 de manière, dans la position déployée, à bloquer en glissement une extrémité d'appui 62 de ce pied.

Le logement 61 pourrait également être remplacé par d'autres moyens de butée aptes à bloquer le pied avant 33 dans la position déployée, comme par exemple un bourrelet de matière disposé sur la plate-forme centrale 8 et conformé pour empêcher le glissement de l'extrémité d'appui 62 sur le plancher 5.

Selon une autre caractéristique de l'invention, le siège 1 comporte également une bielle de conjugaison 63 coudée et montée à rotation, à ses extrémités, sur l'aile latérale de dossier 18 et sur le pied central 31 autour de premier et deuxième pivots de bielle de conjugaison, 65 et 59 respectivement, sensiblement transversaux. Avantageusement, le deuxième pivot de bielle de guidage et le deuxième pivot de bielle de conjugaison sont un même organe, ce qui permet de limiter le nombre de pièces et de faciliter le montage.

La forme de la bielle de conjugaison 63 et la position des pivots de bielle de conjugaison, 65 et 59, sont déterminées de manière que les coussins de dossier 15 et d'assise 23 soient sensiblement perpendiculaires l'un par rapport à l'autre dans la position déployée, et sensiblement accolés l'un à l'autre dans la position rangée.

La partie arrière de l'aile gauche d'assise 27 comporte encore, avantageusement, une protubérance 67 d'écartement du pivot dossier-assise 13 du plan de l'assise 12, de manière que le dossier 11 puisse pivoter autour du pivot 13 jusqu'à ce que les coussins de dossier 15 et d'assise 23 soient sensiblement accolés, sans que ces derniers n'exercent de résistance à ce pivotement par leur compression réciproque.

Le décrochement arrière 9 est conformé pour recevoir le siège 1 dans la position rangée. Avantageusement, le fond 43 comporte une bosse 69 d'appui de l'appui-tête 19 dans cette position.

Les positions successives de la transformation du siège 1 depuis la position rangée jusqu'à la position déployée et le fonctionnement du siège 1 selon l'invention sont décrites ci-dessous.

Dans la position rangée (figure 1), le siège 1 est complètement dissimulé dans le décrochement arrière 9. Les pieds 29, 31 et 33 sont repliés sous la plaque d'assise 25, sensiblement à l'horizontal, orientés vers l'avant par rapport aux pivots arrière 35, central 37 et avant 39, respectivement. L'appui-tête 19 est logé dans l'échancrure 54 et repose sur la bosse 69.

Les coussins de dossier 15 et d'assise 23 sont sensiblement superposés à plat, voire accolés.

Le volume occupé par le siège 1 est donc avantageusement restreint, la longueur du décrochement arrière 9 pouvant être aussi faible que la longueur du dossier 11 et sa hauteur être à peine supérieure au cumul des épaisseurs du dossier 11 et de l'assise 12. La compacité du siège 1 en position rangée permet donc son installation dans des véhicules dont le volume intérieur est restreint.

Avantageusement également, les coussins de dossier 15 et d'assise 23 ne sont pas, ou sont peu, comprimés l'un sur l'autre, de sorte que le siège 1 est maintenu dans la position rangée sous l'effet de son seul poids.

Enfin, avantageusement toujours, la plaque de dossier 17 obture le décrochement arrière 9 en s'alignant avec les plate-formes centrale et arrière, 8 et 10 respectivement.

La plaque de dossier 17 prend appui sur les bords de ces plate-formes 8 et 10. Une partie des efforts exercés sur elle, par exemple par des bagages, est avantageusement repris par l'appui de l'appui-tête 19 sur la bosse 69.

En position rangée, la surface du sol du coffre est donc plane et le siège 1 est invisible. Seule apparaît la poignée de commande 21.

Pour déployer le siège 1, l'utilisateur tire sensiblement verticalement sur la poignée de commande 21 (figure 2).

Les pieds arrière 29 et central 31 se redressent en tournant vers l'avant du siège 1 autour des pivots de base arrière 45 et central 47, respectivement, ce qui élève l'assise 12.

Le redressement du pied central 31 provoque un déplacement du deuxième pivot de bielle de guidage 59 vers l'arrière par rapport à l'aile gauche d'assise 27, et une traction sur la bielle de guidage 55. Cette traction redresse le pied avant 33 sous la plaque d'assise 25 par pivotement autour du pivot avant 39 vers l'arrière du siège 1.

Le redressement du pied central 31 provoque également un déplacement du deuxième pivot de bielle de conjugaison, qui, comme on l'a vu, est de préférence le deuxième pivot de bielle de guidage 59. Ce déplacement vers l'arrière du siège 1, exerce, par l'intermédiaire de la bielle de conjugaison 63, une pression sur le premier pivot de bielle de conjugaison 65 et un redressement du dossier 11 sur l'assise 12 par pivotement autour du pivot dossier-assise 13.

L'utilisateur continue à tirer sur la poignée de commande 21 jusqu'à une position d'équilibre instable proche de celle représentée sur la figure 3, dans laquelle les pieds arrière 29 et central 31 sont sensiblement verticaux.

Après avoir dépassé cette position instable, le siège 1 peut poursuivre seul son déploiement sous l'effet de son propre poids (figure 4). Il s'agit là d'un avantage important de la présente invention.

Les pieds arrière 29 et central 31 poursuivent leur rotation, le pied avant 33 et le dossier 11 continuant à se redresser, jusqu'à ce que les première et deuxième arêtes d'appui 49 et 51 entrent en contact. Le siège 1 est alors déployé (figure 5).

Cet instant correspond précisément aux entrées en appui de la troisième arête d'appui 53 sur la plate-forme centrale 8 et de l'extrémité 62 du pied avant 33 dans le logement 61 ménagé dans cette plate-forme.

Ces deux derniers appuis ne sont pas indispensables au maintien du siège dans la position déployée. Ils confèrent cependant avantageusement une grande stabilité au siège 1.

Le déploiement du siège 1 est donc possible avec une seule main, par une simple et unique traction sur la poignée de commande 21.

En outre aucun moyen de blocage du siège 1 n'est requis, que le siège 1 soit en position rangée ou en position déployée.

Enfin, en position déployée, le décrochement arrière 9 utilisé pour ranger le siège 1 est vide et disponible derrière le passager comme espace de coffre, ce qui constitue un avantage important de la présente invention.

La transformation du siège depuis la position déployée jusqu'à la position rangée s'effectue selon un mouvement contraire à celui décrit ci-dessus. L'utilisateur doit seulement pousser vers l'avant la poignée de commande 21 jusqu'à la position instable (figure 3), la suite du rangement se faisant sous l'effet du poids du siège 1. Avantageusement, l'obturation du décrochement arrière 9 par la plaque de dossier 17 ne nécessite aucune opération particulière d'ajustement ou de blocage de cette plaque.

Comme cela apparaît clairement à présent, la présente invention fournit un siège se déployant vers l'avant, ce qui permet, dans la position déployée, d'utiliser comme volume de coffre l'espace utilisé pour son rangement.

Le siège selon l'invention est en outre particulièrement simple à déployer puisqu'il se déploie en un seul mouvement et d'une seule main.

Enfin, aucune trappe n'est nécessaire pour obturer le décrochement du plancher dans lequel se range le siège selon l'invention. Lors du rangement du siège, la plaque de dossier vient en effet obturer ce décrochement.

Bien entendu, la présente invention n'est pas limitée au mode de réalisation décrit, fourni à titre d'exemple illustratif et non limitatif. Par exemple, la forme des pieds, de l'assise, du dossier, des bielles de guidage et de conjugaison, et les emplacements des différents pivots pourraient être différents de ceux décrits et représentés.

## Revendications

1. Siège, notamment pour véhicule automobile, comportant un dossier (11) et une assise (12) montés à rotation l'un sur l'autre autour d'au moins un pivot dossier-assise (13) sensiblement transversal, comportant au moins deux pieds (29,31), les extrémités du premier pied (29) étant montées à rotation sur ladite assise (12) et sur une base (41), fixée sur un plancher (5), autour de premiers pivots d'assise (35) et de base (45) respectivement, sensiblement transversaux, ledit siège (1) étant mobile entre une position rangée dans laquelle ledit dossier (11) et ledit premier pied (29) sont sensiblement couchés sur ladite assise (12) et une position déployée dans laquelle ledit dossier (11) et ledit premier pied (29) sont sensiblement redressés par rapport à ladite assise (12), ledit siège (1) comportant en outre des moyens de couplage des mouvements dudit premier pied (29) et dudit dossier (11) par rapport à ladite assise (12),
**caractérisé en ce que**, dans ladite position rangée, ledit premier pied (29) est incliné, par rapport audit premier pivot de base (45), vers l'arrière dudit siège (1), de manière que l'espace occupé par ledit siège (1) dans ladite position rangée soit situé, au moins en partie, derrière celui occupé par ledit siège (1) déployé.

2. Siège selon la revendication 1, **caractérisé en ce que** les première et deuxième extrémités d'au moins le deuxième pied (31) sont montées à rotation sur ladite assise (12) et sur ladite base (41) autour de deuxièmes pivots d'assise (37) et de base (47) respectivement, sensiblement transversaux, lesdits premier (29) et deuxième (31) pieds étant conformés de manière à se bloquer réciproquement en rotation dans le sens du déploiement, dans ladite position déployée.

3. Siège selon la revendication 2, **caractérisé en ce que** lesdits premier (29) et deuxième (31) pieds comportent des première (49) et deuxième (51) arêtes d'appui, respectivement, en contact dans ladite position déployée.

4. Siège selon l'une quelconque des revendications 2 et 3, **caractérisé en ce que** lesdits moyens de couplage comportent une bielle de conjugaison (63) montée à rotation, par des première et deuxième extrémités, sur ledit dossier (11) et sur ledit deuxième pied (31), respectivement, autour de premier (65) et deuxième (59) pivots de bielle de conjugaison, respectivement, sensiblement transversaux.

5. Siège selon l'une quelconque des revendications précédentes, **caractérisé en ce qu'**au moins un desdits pieds (31) comporte une troisième arête d'appui (53) prenant appui sur ledit plancher (5) dans ladite position déployée.

6. Siège selon l'une quelconque des revendications précédentes, **caractérisé en ce qu'**il comporte un troisième pied (33) monté à rotation sur ladite assise (12) autour d'un troisième pivot d'assise (39) sensiblement transversal, ledit troisième pied (33) étant guidé en rotation autour dudit troisième pivot d'assise (39) au moyen d'une bielle de guidage (55) montée à rotation autour de premier (57) et deuxième (59) pivots de bielle de guidage, sensiblement transversaux, respectivement sur ledit troisième pied (33) et sur un autre pied (31) dudit siège (1).

7. Siège selon la revendication 6, **caractérisé en ce qu'**il comporte des moyens de butée dudit troisième pied (33) dans ladite position déployée conformés pour empêcher un glissement d'une extrémité d'appui (62) dudit troisième pied (33) sur ledit plancher (5).

8. Siège selon l'une quelconque des revendications 4 à 7, la revendication 6 s'appliquant, **caractérisé en ce que** lesdits deuxièmes pivots de bielle de guidage et de bielle de conjugaison sont un même organe (59).

9. Siège selon l'une quelconque des revendications précédentes, **caractérisé en ce que** ladite assise (12) comporte une protubérance (67) d'écartement dudit pivot dossier-assise (13) du plan de ladite assise (12).

10. Siège selon l'une quelconque des revendications précédentes, **caractérisé en ce que** ledit plancher (5) comporte un décrochement (9) au fond duquel est fixée ladite base (41) et dans lequel ledit siège (1) est complètement escamoté dans ladite position rangée.

11. Siège selon la revendication 10, **caractérisé en ce que** ledit dossier (11) comporte une plaque de dossier (17) conformée pour obturer ledit décrochement (9) dans ladite position rangée.

12. Siège selon l'une quelconque des revendications 10 et 11, **caractérisé en ce que** ledit décrochement (9) comporte une bosse (69) d'appui d'un appui-tête (19) dans ladite position rangée.

## Patentansprüche

1. Sitz, insbesondere für ein Kraftfahrzeug, aufweisend eine Rückenlehne (11) und ein Sitzteil (12), welche in Drehung um mindestens eine, im Wesentlichen transversale Rückenlehnen-Sitzteil-Drehachse (13) aneinander montiert sind, wobei er mindestens zwei Füße (29, 31) aufweist, wobei die Enden des ersten Fußes (29) in Drehung an dem Sitzteil (12) und an einer Basis (41), welche auf einem Boden (5) befestigt ist, um erste, im Wesentlichen transversale Drehachsen des Sitzteils (35) und der Basis (45) jeweils montiert sind, wobei der Sitz (1) zwischen einer weggeräumten Position, in welcher die Rückenlehne (11) und der erste Fuß (29) im Wesentlichen auf dem Sitzteil (12) liegen, und einer entfalteten Position, in welcher die Rückenlehne (11) und der erste Fuß (29) im Wesentlichen im Verhältnis zu dem Sitzteil (12) aufgerichtet sind, beweglich ist, wobei der Sitz (1) des Weiteren Kopplungsmittel der Bewegungen des ersten Fußes (29) und der Rückenlehne (11) im Verhältnis zu dem Sitzteil (12) aufweist,
**dadurch gekennzeichnet, dass**, in der weggeräumten Position, der erste Fuß (29) im Verhältnis zur ersten Drehachse der Basis (45) in Richtung nach hinten vom Sitz (1) derart geneigt ist, dass der durch den Sitz (1) in der weggeräumten Position eingenommene Raum mindestens teilweise hinter demjenigen angeordnet ist, welcher durch den entfalteten Sitz (1) eingenommen wird.

2. Sitz nach Anspruch 1, **dadurch gekennzeichnet, dass** die ersten und zweiten Enden von mindestens dem zweiten Fuß (31) in Drehung an dem Sitzteil (12) und an der Basis (41) um zweite, im Wesentlichen transversale Drehachsen des Sitzteils (37) und der Basis (47) jeweils montiert sind, wobei der erste Fuß (29) und der zweite Fuß (31) derart ausgestaltet sind, um sich wechselweise bzw. gegenseitig in Drehung in der Richtung der Entfaltung in der entfalteten Position zu blockieren.

3. Sitz nach Anspruch 2, **dadurch gekennzeichnet, dass** der erste Fuß (29) und der zweite Fuß (31) erste (49) bzw. zweite (51) Abstützanschläge aufweisen, die in der entfalteten Position in Kontakt sind.

4. Sitz nach irgendeinem der Ansprüche 2 und 3, **dadurch gekennzeichnet, dass** die Kopplungsmittel eine Kopplungsstange (63) aufweisen, welche in Drehung über erste und zweite Enden an der Rückenlehne (11) und an dem zweiten Fuß (31) jeweils um erste (65) und zweite (59) im Wesentlichen transversale Drehachsen der Kopplungsstange montiert ist.

5. Sitz nach irgendeinem der vorangegangenen Ansprüche, **dadurch gekennzeichnet, dass** mindestens einer der Füße (31) einen dritten Abstützanschlag (53) aufweist, der sich in der entfalteten Position auf dem Boden (5) abstützt.

6. Sitz nach irgendeinem der vorangegangenen Ansprüche, **dadurch gekennzeichnet, dass** er einen dritten Fuß (33) aufweist, der in Drehung an dem Sitzteil (12) um eine dritte, im Wesentlichen transversale Drehachse des Sitzteils (39) montiert ist, wobei der dritte Fuß (33) in Drehung um die dritte Drehachse des Sitzteils (39) mittels einer Führungsstange (55) geführt wird, die in Drehung um erste (57) und zweite (59), im Wesentlichen transversale Drehachsen der Führungsstange jeweils an dem dritten Fuß (33) und an einem anderen Fuß (31) des Sitzes (1) montiert ist.

7. Sitz nach Anspruch 6, **dadurch gekennzeichnet, dass** er Anschlagmittel des dritten Fußes (33) in der entfalteten Position aufweist, welche ausgestaltet sind, um ein Gleiten eines Abstützendes (62) des dritten Fußes (33) auf dem Boden (5) zu verhindern.

8. Sitz nach irgendeinem der Ansprüche 4 bis 7, wobei Anspruch 6 angewendet wird, **dadurch gekennzeichnet, dass** die zweiten Drehachsen der Führungsstange und der Kopplungsstange ein gleiches Bauteil (59) sind.

9. Sitz nach irgendeinem der vorangegangenen Ansprüche, **dadurch gekennzeichnet, dass** das Sitzteil (12) eine Ausstülpung (67) zur Beabstandung der Rückenlehne-Sitzteil-Drehachse (13) von der Ebene des Sitzteils (12) aufweist.

10. Sitz nach irgendeinem der vorangegangenen Ansprüche, **dadurch gekennzeichnet, dass** der Boden (5) einen Absatz (9) aufweist, auf dessen Boden die Basis (41) befestigt ist und in welchem der Sitz (1) in der weggeräumten Position vollständig versenkt ist.

11. Sitz nach Anspruch 10, **dadurch gekennzeichnet, dass** die Rückenlehne (11) eine Rückenlehnenplatte (17) aufweist, die ausgestaltet ist, um den Absatz (9) in der weggeräumten Position zu verschließen.

12. Sitz nach irgendeinem der Ansprüche 10 und 11, **dadurch gekennzeichnet, dass** der Absatz (9) einen Vorsprung (69) zur Beabstandung einer Kopfstütze (19) in der weggeräumten Position aufweist.

## Claims

1. A seat, in particular for an automobile vehicle, comprising a seatback (11) and a seating portion (12) mounted to rotate with respect to one another about at least one substantially transverse seatback-seating portion pivot (13), comprising at least two feet (29, 31), the ends of the first foot (29) being mounted to rotate on the seating portion (12) and on a base (41) secured to the floor (5) about respective first substantially transverse seating portion and base pivots (35, 45), the seat (1) moving betwveen a stowed position in which the seatback (11) and the first foot (29) are substantially folded on the seating portion (12) and a deployed position in which the seatback (11) and the first foot (29) are substantially raised with respect to the seating portion (12), the seat (1) further comprising means for coupling the movements of the first foot (29) and the seatback (11) with respect to the seating portion (12), **characterised in that**, in the stowed position, the first foot (29) is inclined with respect to the first base pivot (45) towards the rear of the seat (1) so that the space occupied by this seat (1) in the stowed position is at least partly disposed behind that occupied by the deployed seat (1).

2. A seat as claimed in claim 1, **characterised in that** the first and second ends of at least the second foot (31) are mounted to rotate on the seating portion (12) and on the base (41) about respective second substantially transverse seating portion and base pivots (37, 47), the first (29) and second (31) feet being shaped so as mutually to lock one another against rotation in the direction of deployment, in the deployed position.

3. A seat as claimed in claim 2, **characterised in that** the first (29) and second (31) feet comprise respective first (49) and second (51) bearing edges which are in contact in the deployed position.

4. A seat as claimed in any one of claims 2 and 3, **characterised in that** the coupling means comprise a connecting rod (63) mounted to rotate, via first and second ends, on the seatback (11) and on the second foot (31) respectively; about respective first (65) and second (59) substantially transverse connecting rod pivots.

5. A seat as claimed in any one of the preceding claims, **characterised in that** at least one of the feet (31) comprises a third bearing edge (53) bearing on the floor (5) in the deployed position.

6. A seat as claimed in any one of the preceding claims, **characterised in that** it comprises a third foot (33) mounted to rotate on the seating portion (12) about a third substantially transverse seating portion pivot (39), the third foot (33) being guided in rotation about this third seating portion pivot (39) by means of a guide rod (55) mounted to rotate, about the first (57) and second (59) substantially transverse guide rod pivots, on the third foot (33) and on another foot (31) of the seat (1) respectively.

7. A seat as claimed in claim 6, **characterised in that** it comprises means for retaining the third foot (33) in the deployed position shaped to prevent any sliding of a bearing end (62) of the third foot (33) on the floor (5).

8. A seat as claimed in claim 6 and any one of claims 4 to 7, **characterised in that** the two guide rod and connecting rod pivots are the same member (59).

9. A seat as claimed in any one of the preceding claims, **characterised in that** the seating portion (12) comprises a projection (67) spacing the seatback-seating portion pivot (13) from the plane of the seating portion (12).

10. A seat as claimed in any one of the preceding claims, **characterised in that** the floor (5) comprises a recess (9) at the base of which the base (41) is secured and in which the seat (1) is completely retracted in the stowed position.

11. A seat as claimed in claim 10, **characterised in that** the seatback (11) comprises a back plate (17) shaped to close off the recess (9) in the stowed position.

12. A seat as claimed in any one of claims 10 and 11, **characterised in that** the recess (9) comprises a bearing boss (69) for a headrest (19) in the stowed position.
